# EUROPÄISCHE PATENTSCHRIFT

(11) **EP 1 163 142 B1**
(45) Veröffentlichungstag und Bekanntmachung des Hinweises auf die Patenterteilung: **08.01.2003**
(21) Anmeldenummer: 00918673.5
(22) Anmeldetag: 24.02.2000
(51) Int. Cl.: B62D 5/07

(54) **PRIORITÄTSVENTIL FÜR EINEN HYDRAULISCHEN LENKKREISLAUF**
PRIORITY VALVE FOR A HYDRAULIC STEERING CIRCUIT
SOUPAPE DE PRIORITE POUR UN CIRCUIT DE DIRECTION HYDRAULIQUE

(30) Priorität: 27.02.1999 DE 19908614
(43) Veröffentlichungstag der Anmeldung: 19.12.2001
(73) Patentinhaber: Bosch Rexroth AG, 97816 Lohr am Main (DE)
(72) Erfinder: BERGMANN, Erhard, D-19079 Banzkow (DE); VOSSBERG, Hartmut, D-19370 Parchim (DE); VOSS, Gerhard, D-19370 Parchim (DE)
(74) Vertreter: Jaap, Reinhard
(86) Internationale Anmeldenummer: DE0000522
(87) Internationale Veröffentlichungsnummer: WO00051873

(56) Entgegenhaltungen:
- EP-A- 0 090 129
- DE-A- 3 619 331
- DE-C- 19 537 241
- US-A- 4 556 078

## Beschreibung

Die Erfindung bezieht sich auf ein Prioritätsventil für eine hydraulische Lenkeinrichtung nach dem Oberbegriff des Anspruchs 1.

Prioritätsventile dieser Art sind allgemein bekannt und werden vorwiegend in mobilen Anlagen eingesetzt, die aus einem hydraulischen Kreislauf zur Versorgung einer hydraulischen Lenkeinrichtung und aus einem hydraulischen Kreislauf zur Versorgung mindestens eines weiteren Verbrauchers bestehen. Dabei besitzen beide Kreisläufe einer mobilen Anlage eine gemeinsame Versorgungspumpe und ein gemeinsames Prioritätsventil. Das Prioritätsventil arbeitet nach dem Prinzip eines Drei-Wege-Stromventiles und teilt den Pumpenstrom auf beide Kreisläufe auf, wobei der Lenkungskreislauf absolute Priorität bekommt. Demnach besitzt das Prioritätsventil ein Gehäuse mit einem Zulaufanschluss für die Pumpe und zwei Ablaufanschlüsse für die Lenkeinrichtung und für den weiteren Verbraucher sowie einen federbelasteten Regelkolben. Aus der zur Lenkeinrichtung führenden Hauptleitung im Prioritätsventil zweigt eine Lastsignalleitung ab, die zum einen zur federbelasteten Seile des Regelkolbens und zum anderen parallel zur Hauptleitung zur Lenkeinrichtung führt und dort hinter einer Verstelldrosscl wieder in die Hauptleitung einmündet. In dieser Steuerleitung befindet sich eine die Größe des Steuerölstromes bestimmende Dynamikdüse. Hinter dem Prioritätsventil zweigt aus der zur Lenkeinrichtung führenden Hauptleitung weiterhin eine Steuerleitung für die nichtfederbelastete Seite des Regelkolbens ab, in der sich eine Dämpfungsdüse befindet, die für eine stabile Bewegung des Regelkolbens verantwortlich ist. Parallel zu dieser Dämpfungsdüse befindet sich in dieser Steuerleitung ein die Dämpfungsdüse in Richtung von der Lenkeinrichtung zum Prioritätsventil umgehendes Rückschlagventil. Damit wird eine Dämpfung der Bewegung des Regelkolbens umgangen und eine erforderliche schnelle Reaktion des Regelkolbens ermöglicht, wenn beispielsweise der zweite Verbraucherkreislauf abgeschalten wird. Solche Prioritätsventile haben nun den Nachteil, dass bei einem von einer hohen Viskosität des Öles geprägten Kaltstart oder bei auftretenden Druckspitzen im Lenkungskreislauf der Regelkolben unter dem Einfluss der Dämpfungsdüse zu träge auf die neuen Betriebsbedingungen reagiert.

Aus der gattungsgemäßen DE 36 19 331 A1 ist nun beispielsweise ein Prioritätsventil bekannt, das diesen Nachteil ausschließt und das eine Umgehung der Dämpfungsdüse auch in die andere Bewegungsrichtung des Regelkolbens ermöglicht. Dazu ist im Regelkolben des Prioritätsventiles ein federbelasteter Steuerkolben eingesetzt, der auf der nichtfederbelasteten Seite vom Druck vor der Dynamikdüse und auf der federbelasteten Seite vom Druck hinter der Dynamikdüse belastet wird. Eine solche Steuerung des Regelkolbens arbeitet zufriedenstellend, da die Bewegungen des Regelkolbens bei normalen Betriebsbedingungen gedämpft und in extremen Betriebsbedingungen in beiden Richtungen schnellreagierend ablaufen. Diese Lösung ist allerdings technisch schwer umzusetzen, da sich die, die beiden Drucksignale liefernde Dynamikdüse naturgemäß auf der federbelasteten Seite des Regelkolbens und die, mit Drucksignalen zu versorgende Dämpfungsdüse auf der nichtfederbelasteten Seite des Regelkolbens befinden. Daher muss sich der Steuerkolben konstruktiv über die gesamte Länge des Regelkolbens erstrecken. Das erfordert eine komplizierte fertigungstechnische Bearbeitung von beiden Seiten und über eine große Länge. Außerdem ergeben sich große Dichtflächen, die wiederum schwer zu bearbeiten sind und außerdem im Betrieb zu Verklemmungen neigen.

Der Erfindung liegt die Aufgabe zu Grunde, den Regelkolben eines Prioritätsventiles der vorliegenden Gattung mit einem Steuerorgan auszurüsten, das eine gedämpfte Bewegung des Regelkolbens bei normalen Betriebsbedingungen und eine schnelle Bewegung des Regelkolbens bei extremen Betriebsbedingungen ermöglicht und dabei einfach in der Herstellung und störunanfällig im Betrieb ist.

Diese Aufgabe wird durch die kennzeichnenden Merkmale des Anspruchs 1 gelöst. Eine zweckdienliche Ausgestaltung der Erfindung ergibt sich aus den Merkmalen des Anspruchs 2.
Die Erfindung beseitigt die genannten Nachteile des Standes der Technik.

Von besonderem Vorteil ist, dass die geforderten Funktionen mit einer sehr einfachen konstruktiven Ausführung des Prioritätsventiles erfüllt werden. Das Steuerventil ist sehr klein und kompakt ausführbar, weil die für die Funktion erforderlichen Drücke nicht mehr von der weit entfernten Dynamikdüse, sondern von der im Steuerventil befindlichen Dämpfungsdüse geholt werden. Das klein ausgeführte Steuerventil vereinfacht die Fertigung der Einzelteile und senkt damit die Herstellungskosten. Das Steuerventil besteht aus wenig Einzelteilen.

Die Erfindung soll nachstehend an Hand eines Auslührungsbeispieles näher erläutert werden.

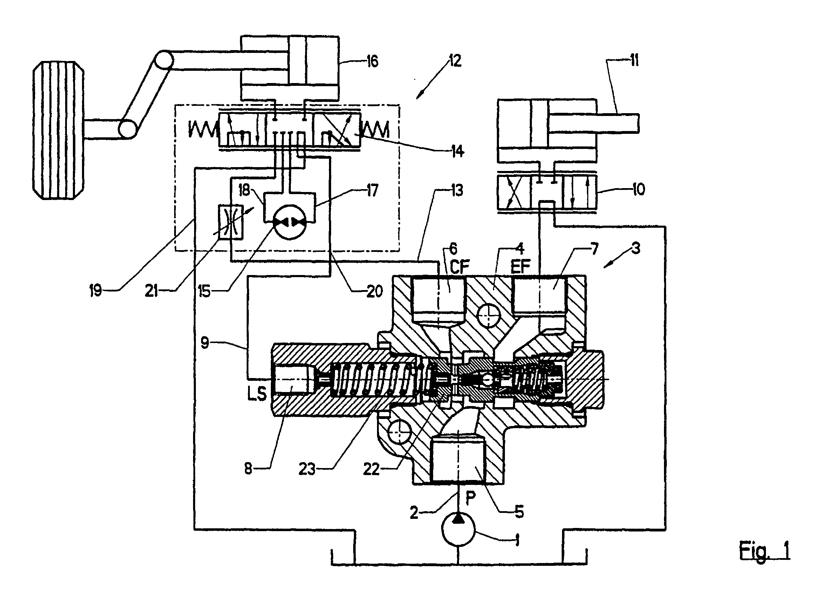

Dazu zeigen
- Fig. 1.: eine Schnittdarstellung des Prioritätsventiles innerhalb eines vereinfacht dargestellten Kreislaufes,

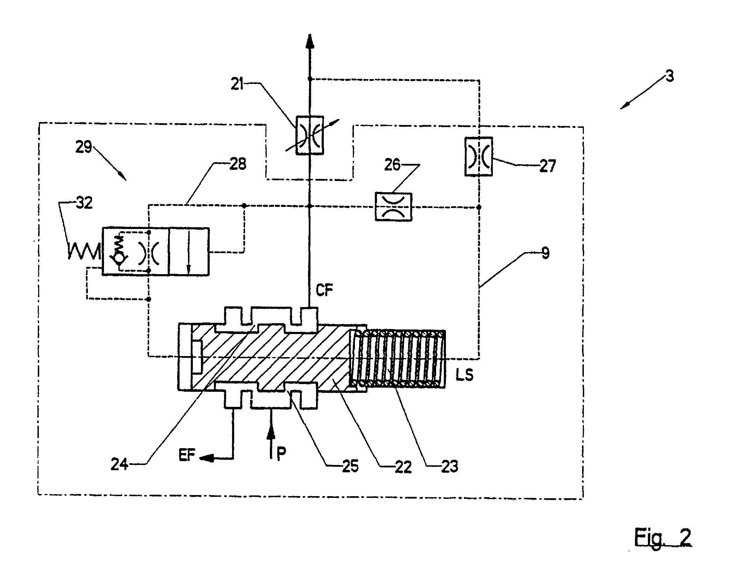

- Fig. 2.: eine symbolische Darstellung des Prioritätsventiles,

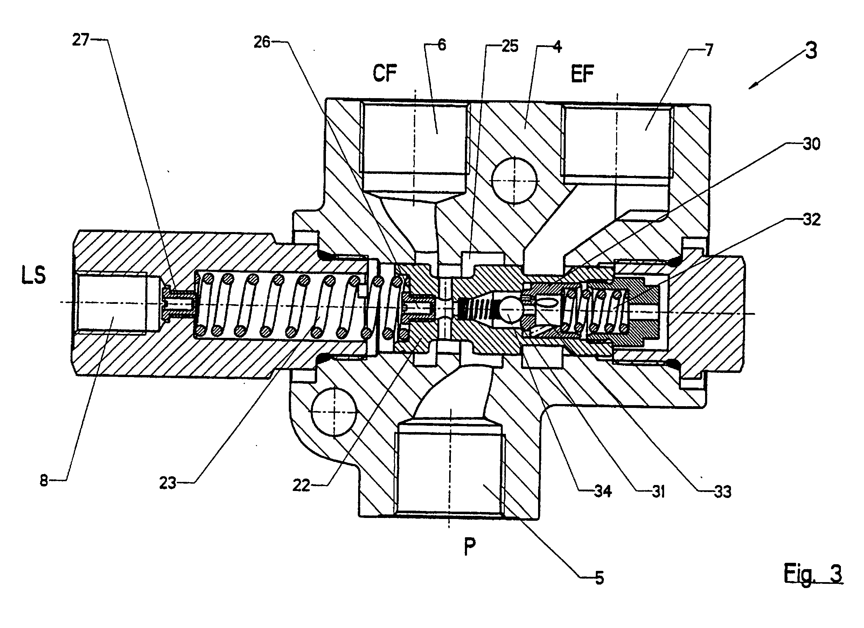

- Fig. 3.: eine vergrößerte Darstellung des Prioritätsventiles und

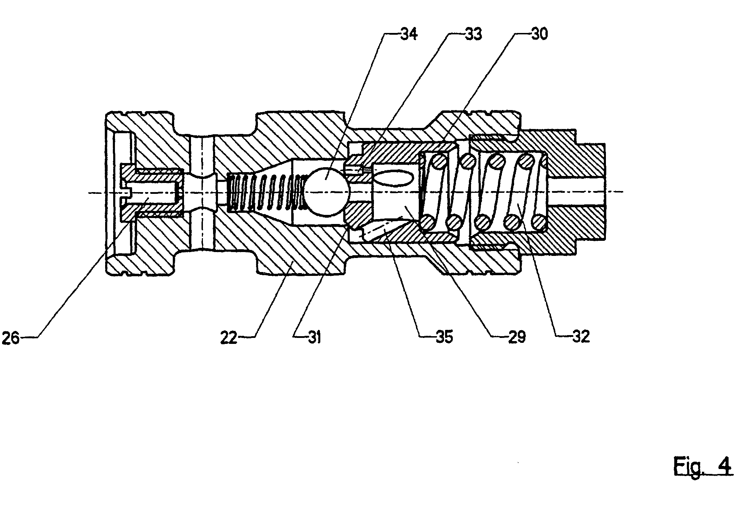

- Fig. 4.: den Regelkolben des Prioritätsventiles.

Ein Kreislauf, in dem der Einsatz eines Prioritätsventiles erforderlich wird, besteht in der Hauptsache aus einer Versorgungspumpe 1, die über eine Pumpenleitung 2 mit dem Prioritätsventil 3 verbunden ist. Das Prioritätsventil 3 besteht aus einem Gehäuse 4 mit einem Zulaufanschluss 5 für die Pumpenleitung 2 sowie weiteren Anschlüssen, nämlich einem Ablaufanschluss 6 für den Lenkungskreislauf, einem Ablaufanschluss 7 für den zusätzlichen Verbraucherkreislauf und einem Lastsignalanschluss 8 für eine Lastsignalleitung 9.
Im zusätzlichen Verbraucherkreislauf befinden sich in der Hauptsache ein Wegeventil 10 und ein hydraulischer Verbraucher 11.
Der Lenkungskreislauf besteht hauptsächlich aus einer hydraulischen Lenkeinrichtung 12, die über eine Zulaufleitung 13 mit dem Prioritätsventil 3 verbunden ist und im wesentlichen aus einem Steuerteil 14 und einem Dosierteil 15 besteht, und aus einem hydraulischen Verbraucher 16 für die zu lenkenden Räder eines Fahrzeuges, der über Ablaufleitungen 17, 18 mit der Lenkeinrichtung 12 Verbindung hat. Die Lenkeinrichtung 12 besitzt weiterhin einen zum Tank der Anlage führenden Ablaufanschluss 19 sowie einen Lastsignalanschluss 20, der über die Lastsignalleitung 9 mit dem Lastsignalanschluss 8 des Prioritätsventiles 3 verbunden ist.
Das Steuerteil 14 der Lenkeinrichtung 12 besitzt als ein wesentliches Bestandteil eine erste verstellbare Drossel 21.
Das Prioritätsventil 3 ist mit einem Regelkolben 22 ausgerüstet, der in einer Bohrung des Gehäuses 4 geführt und einseitig von einer Regelfeder 23 belastet ist. Dieser Regelkolben 22 besitzt zwei Steuerkanten, die im Zusammenspiel mit Steuerkanten im Gehäuse 4 einen Steuerspalt 24 für den zum weiteren Verbraucher 11 führenden Ölstrom und einen Steuerspalt 25 für den zur Lenkeinrichtung 12 führenden Ölstrom ausbilden. Hinter dem Steuerspalt 25 zweigt die Lastsignalleitung 9 aus der zur Lenkeinrichtung 12 führenden Zulaufleitung 13 ab und führt einerseits zum Federraum der Regelleder 23 und andererseits zum Lastsignalanschluss 20 der Lenkeinrichtung 12. Innerhalb der Lenkeinrichtung 12 mündet die Lastsignalleitung 9 hinter der ersten verstellbaren Drossel 21 wieder in die Hauptstromleitung der Lenkeinrichtung 12 ein. In der Lastsignalleitung 9 zwischen der Zulaufleitung 13 und dem Federraum der Regelfeder 23 ist eine Dynamikdüse 26 angeordnet, während sich in der Lastsignalleitung 9 zwischen dem Federraum der Regelfeder 23 und der Lenkeinrichtung 12 eine Dämpfungsdüse 27 befindet.
Hinter dem Steuerspalt 25 zweigt weiterhin eine Steuerleitung 28 aus der zur Lenkeinrichtung 12 führenden Zulaufleitung 13 ab und führt zur nichtfederbelasteten Seite des Regelkolbens 22. In dieser Steuerleitung 28 ist ein Steuerventil 29 angeordnet. Dieses Steuerventil 29 besitzt einen Steuerkegel 30, der in einer Bohrung im Regelkolben 22 mit Spiel eingepasst ist, der mit einer Kante des Regelkolbens 22 einen Dichtsitz 31 ausbildet und der zur nichtfederbelasteten Seite des Regelkolbens 22 hin öffnend ausgerichtet ist. Der Steuerkegel 30 wird in Richtung des Dichtsitzes 31 von einer Druckfeder 32 und vom herrschenden Druck auf der nichtfederbeaufschlagten Seite des Regelkolbens 22 und in der entgegengesetzten Richtung vom Druck vor der Dynamikdüse 26 belastet. In der zum Regelkolben 22 gerichteten Stirnseite des Steuerkegels 30 befindet sich eine Dämpfungsdüse 33 und parallel dazu ein federbelastetes Rückschlagventil 34. Dieses Rückschlagventil 34 schließt in Richtung von der Zulaufleitung 13 zur Lenkeinrichtung zur nichtfederbelasteten Seite des Regelkolbens 22. Im Steuerkegel 30 befindet sich wiederum parallel zur Dämpfungsdüse 33 ein Verbindungskanal 35, der in der vom Dichtsitz 31 abgehobenen Stellung des Steuerkegels 30 die nichtfederbelastete Seite des Regelkolbens 22 mit der Zulaufleitung 13 zur Lenkeinrichtung 12 verbindet.

In der Neutralstellung ist die Lenkeinrichtung 12 geschlossen. Über die Dynamikdüse 26 bildet sich ein Lastsignalstrom, der über die Lastsignalleitung 9 zur Lenkeinrichtung 12 und von dort drucklos in den Tank führt.
Der in der Zulaufleitung 13 zur Lenkeinrichtung befindliche Druck breitet sich über die Dämpfungsdüse 33 auf die nichtfederbelastete Seite des Regelkolbens 22 aus und verschiebt ihn entgegen der Kraft seiner Regelfeder 23 in Richtung eines sich verkleinernden Steuerspaltes 25 zur Lenkeinrichtung 12. Damit wird der Steuerspalt 24 zum weiteren Verbraucher 11 aufgemacht.

Bei Betätigung der Lenkeinrichtung 12 stellt sich in der Lastsignalleitung 9 ein von der Belastung der Lenkanlage abhängiger Druck ein, der sich bis zur federbelasteten Seite des Regelkolbens 22 ausbreitet und ihn belastet. Mit Unterstützung der Regelfeder 23 verschiebt sich der Regelkolben 22 in Richtung eines sich vergrößernden Steuerspaltes 25 zur Lenkeinrichtung 12, bis sich ein Gleichgewichtszustand am Regelkolben 22 einstellt und der Steuerspalt 25 eine von der Belastung der Lenkeinrichtung 12 abhängige Größe einnimmt. Damit wird die Lenkeinrichtung 12 ausreichend mit Drucköl versorgt. Bei einem Versorgungsüberschuss nimmt der Regelkolben 22 eine Zwischenstellung ein und versorgt über den zweiten Steuerspalt 24 den weiteren Verbraucher 11 mit dem Restölstrom.
Druckschwankungen, die von außen auf das System einwirken, ist der Regelkolben 22 bestrebt zu folgen.
Eine Übertragung kleinerer Druckschwankungen oder Druckschwingungen wird durch die Dämpfungsdüse 33 abgeschwächt, weil der Volumenausgleich am Regelkolben 22 abgebremst wird.
Eine nichtgewollte Dämpfung der Bewegung des Regelkolbens 22 wird durch eine Umgehung der Dämpfungsdüse 33 erreicht. So öffnet das Rückschlagventil 34, wenn der weitere Verbraucher 11 abschaltet und der Regelkolben 22 sich schnell in Richtung eines sich vergrößernden Dichtspaltes 25 verschieben muss. Das Steuerventil 29 bleibt dabei geschlossen.
Das Steuerventil 29 öffnet aber, wenn beispielsweise Druckspitzen im Lenkkreislauf auftreten oder die hydraulische Anlage kalt gestartet wird und der Regelkolben 22 schnell sich in Richtung eines sich verkleinernden Dichtspaltes 25 zur Lenkeinrichtung 12 verschieben muss.

### Aufstellung der Bezugszeichen

- 1: Versorgungspumpe
- 2: Pumpenleitung
- 3: Prioritätsventil
- 4: Gehäuse
- 5: Zulaufanschluss
- 6: Ablaufanschluss
- 7: Ablaufanschluss
- 8: Lastsignalanschluss
- 9: Lastsignalleitung
- 10: Wegeventil
- 11: Verbraucher
- 12: Lenkeinrichtung
- 13: Zulaufleitung
- 14: Steuerteil
- 15: Dosierteil
- 16: Verbraucher
- 17: Ablaufleitung
- 18: Ablaufleitung
- 19: Ablaufanschluss
- 20: Lastsignalanschluss
- 21: erste verstellbare Drossel
- 22: Regelkolben
- 23: Regelfeder
- 24: Steuerspalt Verbraucher
- 25: Steuerspalt Lenkung
- 26: Dynamikdüse
- 27: Dämpfungsdüse
- 28: Steuerleitung
- 29: Steuerventil
- 30: Steuerkegel
- 31: Dichtsitz
- 32: Druckfeder
- 33: Dämpfungsdüse
- 34: Rückschlagventil
- 35: Verbindungskanal

## Patentansprüche

1. Prioritätsventil für einen hydraulischen Lenkkreislauf, der mit einem weiteren Verbraucherkreislauf parallel geschalten ist und gemeinsam von einer Versorgungspumpe (1) mit Öl versorgt wird, wobei das Prioritätsventil (3) den Pumpenstrom mit Vorrang für den Lenkkreislauf aufteilt, wobei
- der Lenkkreislauf eine Lenkeinrichtung (12) besitzt, die mit dem Prioritätsventil (3) über eine Zulaufleitung (13) und über eine parallele, vor einer ersten verstellbaren Drossel (21) abzweigende und hinter der verstellbaren Drossel (21) einmündende Lastsignalleitung (9) miteinander verbunden sind,
- das Prioritätsventil (3) aus einem Gehäuse (4) mit einem von einer Regelfeder (23) belasteten Regelkolben (22) besteht, dessen federbelastete Seite mit der Lastsignalleitung (9) verbunden ist, in der sich eine Dynamikdüse (26) befindet und dessen nichtfederbelastete Seite mit der Zulaufleitung (13) zur Lenkeinrichtung (12) verbunden ist, in der sich eine Dämpfungsdüse (33) befindet, wobei die Dämpfungsdüse (33) in Richtung eines sich vergrößernden Steuerspaltes (25) für die Lenkeinrichtung (12) von einem Rückschlagventil (34) und in der Gegenrichtung durch ein federbelastetes und schaltbares Steuerventil (29) umgehbar ausgeführt ist,
**dadurch gekennzeichnet, dass** die nichtfederbelastete Seite des schaltbaren Steuerventils (29) mit der Zulaufleitung (13) zur Lenkeinrichtung (12) und die federbelastete Seite des schaltbaren Steuerventils (29) mit dem Druckraum der nichtfederbelasteten Seite des Regelkolbens (22) des Prioritätsventiles (3) verbunden ist.

2. Prioritätsventil nach Anspruch 1, wobei das Steuerventil (29) im Regelkolben (22) eingepasst ist, **dadurch gekennzeichnet, dass** das Steuerventil (29) aus einem federbelasteten Steuerkegel (30) besteht, der mit einer Kante des Regelkolbens (22) einen sich in Richtung eines sich verkleinernden Steuerspaltes (25) für die Lenkeinrichtung (12) öffnenden Dichtsitz (31) bildet und der an seiner Stirnseite die Dämpfungsdüse (33) und das Rückschlagventil (34) aufnimmt.

## Claims

1. Priority valve for a hydraulic steering circuit, which is connected in parallel to a further load circuit and jointly supplied with oil by a supply pump (1), wherein the priority valve (3) apportions the pump flow giving priority to the steering circuit, wherein
- the steering circuit has a steering device (12), which are connected to one another by the priority valve (3) via a supply line (13) and via a parallel load signal line (9), which branches off upstream of a first adjustable throttle (21) and opens out downstream of the adjustable throttle (21),
- the priority valve (3) comprises a housing (4) having a control piston (22), which is loaded by a control spring (23) and of which the spring-loaded side is connected to the load signal line (9), in which a dynamic response nozzle (26) is situated, and of which the non-spring-loaded side is connected to the supply line (13) to the steering device (12), in which a damping nozzle (33) is situated, wherein the damping nozzle (33) is designed so as to be by-passable in the direction of an increasing control gap (25) for the steering device (12) by a nonreturn valve (34) and in the opposite direction by a spring-loaded and switchable control valve (29),
**characterized in that** the non-spring-loaded side of the switchable control valve (29) is connected to the supply line (13) to the steering device (12) and the spring-loaded side of the switchable control valve (29) is connected to the pressure chamber of the non-spring-loaded side of the control piston (22) of the priority valve (3).

2. Priority valve according to claim 1, wherein the control valve (29) is fitted in the control piston (22), **characterized in that** the control valve (29) comprises a spring-loaded control cone (30), which together with an edge of the control piston (22) forms a sealing seat (31), which opens a reducing control gap (25) for the steering device (12), and at its end receives the damping nozzle (33) and the nonreturn valve (34).

## Revendications

1. Soupape de priorité pour un circuit de direction hydraulique qui est monté en parallèle avec un autre circuit de consommation et est conjointement approvisionné en huile par une pompe d'approvisionnement (1), la soupape de priorité (3) répartissant le flux de la pompe avec une préséance pour le circuit de direction, pour laquelle
- le circuit de direction possède une installation de direction (12) qui est reliée à la soupape de priorité (3) au moyen d'une conduite d'alimentation (13) et au moyen d'une conduite de signalisation de charge (9) parallèle qui est en dérivation devant un premier étrangleur (21) réglable et qui débouche derrière l'étrangleur (21) réglable,
- la soupape de priorité (3) se compose d'un boîtier (4) avec un piston de régulation (22) sollicité par un ressort de régulation (23) et dont le côté chargé par ressort est relié à la conduite de signalisation de charge (9) dans laquelle se trouve une buse dynamique (26), et dont le côté non chargé par ressort est relié à la conduite d'alimentation (13) vers l'installation de direction (12) dans laquelle se trouve une buse d'amortissement (33), la buse d'amortissement (33) étant réalisée de façon à contourner des obstacles en direction d'un intervalle de commande (25) s'agrandissant pour l'installation de direction (12) d'un clapet anti-retour (34), et en direction contraire par une soupape de commande (29) commutable et sollicitée par ressort,
**caractérisée en ce que**
le côté non sollicité par ressort de la soupape de comrnande (29) commutable est relié à la conduite d'alimentation (13) vers l'installation de direction (12), et le côté chargé par ressort de la soupape de commande (29) commutable est relié à l'espace de pression du côté non chargé par ressort du piston de régulation (22) de la soupape de priorité (3).

2. Soupape de priorité selon la revendication 1, dont la soupape de commande (29) est ajustée dans le piston de régulation (22),
**caractérisée en ce que**
la soupape de commande (29) est composée d'un cône de commande (30) chargé par ressort qui forme avec une arête du piston de régulation (22) un siège étanche (31), qui s'ouvre en direction d'un intervalle de commande (25) se réduisant, pour l'installation de direction (12), et qui reçoit sur son côté frontal la buse d'amortissement (33) et le clapet anti-retour (34).
